# EUROPEAN PATENT SPECIFICATION

(11) **EP 2 082 185 B1**
(45) Date of publication and mention of the grant of the patent: **27.01.2010**
(21) Application number: 07820098.7
(22) Date of filing: 10.09.2007
(51) Int. Cl.: G01B 5/012, G01B 7/00, G01B 7/012

(54) **HEAD FOR CHECKING LINEAR DIMENSIONS OF MECHANICAL PIECES**
KOPF ZUM PRÜFEN DER LINEAREN ABMESSUNGEN VON MECHANISCHEN STÜCKEN
TETE PERMETTANT DE VERIFIER LES DIMENSIONS LINEAIRES DE PIECES MECANIQUES

(30) Priority: 12.09.2006 IT BO20060628
(43) Date of publication of application: 29.07.2009
(73) Proprietor: Marposs Societa' Per Azioni, 40010 Bentivoglio (BO) (IT)
(72) Inventor: DALL'AGLIO, Carlo, I-40050 Castello D'argile Bo (IT)
(86) International application number: PCT/EP2007/059479
(87) International publication number: WO 2008/031801

(56) References cited:
- WO-A-00/22373
- US-A1- 2004 255 703
- US-B1- 6 269 546

## Description

### Technical Field

The present invention relates to a head for checking the linear dimensions of mechanical pieces, including a support element that defines a longitudinal geometrical axis, a movable armset with an arm, movable with respect to the support element and carrying a feeler, a fulcrum, coupled to the arm and to the support element for enabling limited rotational displacements of the arm with respect to the support element, a retraction device, including a piston movable with respect to the support element and sealing elements, the piston being adapted for cooperating with the movable arm to bring the movable arm to a definite inoperative position, and a transducer for providing signals depending on the position of the arm with respect to the support element.

### Background Art

There are known many types of gauging or measuring heads, including such features, for the inspection of mechanical pieces in benches, transfer lines or in so-called "in-process" applications in the course of the machining in machine tools.

U.S. patent US-B1-6269546 refers to this kind of heads. The U.S. patent discloses, among a number of features, two different systems for realizing the so-called feeler/-s retraction, i.e. for displacing the feeler/-s to a position which is far from the surface of the workpiece to be checked, in order to avoid accidental impacts and/or undesired slidings of the feeler/-s in the course of displacements between head and workpiece towards/away from each other.

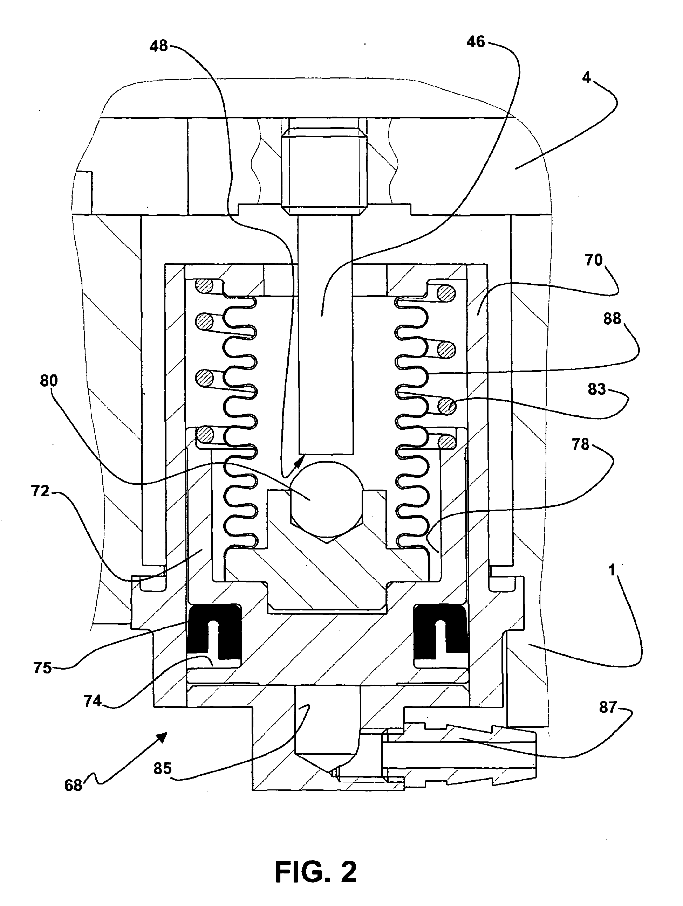

The first system, shown in simplified form in figure 2 of the U.S. patent, includes a device with a piston coupled to a pneumatic circuit. When the device is activated, the piston urges the arm to an inoperative position, that is defined by appropriate limitation abutments. As the head has reached the checking position, the air supply is interrupted: the piston takes back the former position thanks to the action of a spring, and the feeler can freely displace towards the surface to be checked.

In the second system, to which figure 9 of the mentioned U.S. patent refers, the piston is replaced by a bellows - also fed by a pneumatic circuit - including one end which is open and coupled to the casing, and the other end which is closed and free to urge the arm to a retracted position. The first system, known for a long time, presents some problems especially in the case of damping liquid inside the casing. In fact, sealing gaskets between the piston and the internal surface of the associated cylinder must enable the suitable mutual displacement between the two parts, e.g. avoiding to hinder the correct return of the piston to the initial position. As a consequence, the wet seal action is only partial and fluid is progressively released through the ducts of the pneumatic circuit. Thus, it is difficult to combine sealing action and friction limitation at the same time, to ensure correct operation and reliability in time.

The device with the bellows shown in figure 9 of patent US-B1-6269546 enables remarkable advantages in terms of simplicity and friction absence.

The bellows is very stressed and is subject to great deformations. For this reason, choosing materials that can assure the solution reliability is often difficult.

### Disclosure of the invention

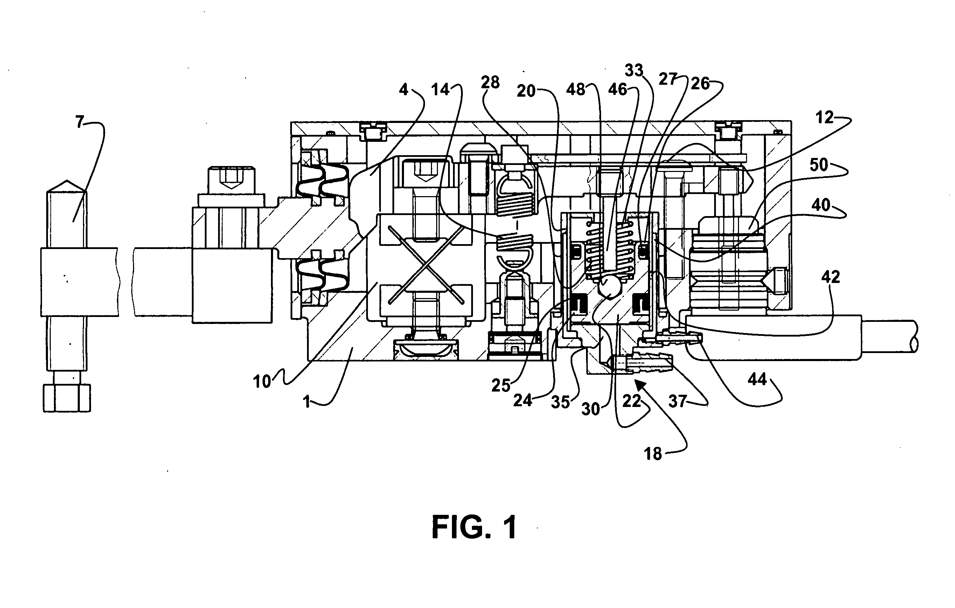

Object of the present invention is to provide a head for checking linear dimensions of mechanical pieces including a retraction device that is simple and assures an increased reliability with respect to the already known solutions. This object is achieved by a head according to claim 1. Among the advantages that the solution according to the present invention provides, there is the following remarkable advantage. In the known retraction piston devices, in the course of sliding displacements, small amounts of air inevitably leak between the gaskets and the cylinder wall and, flowing among the movable parts (for example in piston seats that are only partially filled by gaskets) interferes with the correct operation of the device. In order to solve this problem, the known devices provide appropriates ducts for discharging the leaked air through a drainage pipe. A known solution is shown in simplified form in figure 1. In addition to electrical and pneumatic connections of the head, there is the drainage pipe that must be correctly located to prevent fluids present in the machine from being sucked. The solution according to the present invention enables to eliminate the drainage pipe, as it will be hereinafter illustrated.

### Brief Description of the Drawings

The invention is now described in more detail with reference to the enclosed sheets of drawings, given by way of non limiting example, wherein:
figure 1 is a longitudinal cross-sectional view of a head, according to the prior art, with some details shown in front view for the sake of simplicity and clarity; and
figure 2 is a partial longitudinal cross-sectional view, in enlarged scale, of a head according to the present invention, showing a retraction device.

Figure 1 shows a gauging head of a known type, substantially of the same type of heads outlined in the mentioned patent US-B1-6269546, to which reference is made for a more detailed description.

In brief, the head shown in figure 1 includes a support element with a casing **1,** that is made of steel and substantially parallelepipedon shaped, and defines a longitudinal geometrical axis. A movable armset includes an arm **4** arranged along a direction substantially parallel to the longitudinal geometrical axis of the casing **1.** The arm **4** includes an internal portion, located inside casing **1,** and an external portion, located outside casing **1,** carrying a feeler **7.** With reference to the arrangement shown in figure 1, the feeler **7** is intended for touching a mechanical surface arranged in the upper, part of the figure. Through appropriated openings, an inside hollow of casing **1** can be filled with damping fluid, such as oil with particular viscosity features in order to decrease the speed of the arm displacement. This feature is particularly important in the case of checking of grooved surfaces. A fulcrum **10** is coupled to surfaces of the casing **1** and of the arm **4** and includes a deformable element. The fulcrum **10** enables the arm **4** to perform limited but accurate rotational displacements about an axis perpendicular to the longitudinal geometrical axis of the casing **1.** These displacements are limited by means of mechanical limiting devices obtained in a known way. For example, figure 1 shows a screw **12,** passing through a hole of the arm **4** and screwed into the casing **1.** The abutment of an area of the internal portion of the arm **4** against the head of such screw **12** limits the upward rotation of the arm **4,** in a counterclockwise direction in figure 1, that corresponds to a displacement of the feeler **7** away from the surface of the workpiece to be checked. Other mechanical elements, not visible in the cross-section of figure 1, cooperate for limiting rotations of the arm **4** in the opposite direction. A biasing device for urging the feeler **7** against the surface of a mechanical piece to be checked includes a return spring **14** that is inserted in an appropriated seat and has one end coupled to the arm **4** and the other end coupled to a setting element, which is, in turn, coupled to the casing **1.**

A pneumatically-operated retraction device **18** for bringing the arm **4** to a definite inoperative position, that is generally defined by the mechanical limit stop of the screw **12,** is made as follows.

In a casing seat there is located a cylinder **20.** A piston **22** can slide inside cylinder **20** and includes two circular seats **24** and **26** for housing sealing elements with gaskets **25** and **27,** that are intended for realizing the sealing between the piston **22** and the inside wall of the cylinder **20.** More specifically, the gasket **25** belongs to the "lip seal" type and provides a prevailing sealing action in one of the two displacement directions of the piston **22.** The gasket **27** is substantially symmetric, for example it is a so-called "O-ring" having the shape of an annulus. The piston has a central hollow area **28** and an axially arranged ball **30,** which defines a thrust surface.

The ends of a compression spring **33** are coupled to the piston **22** and the cylinder **20,** respectively. An axial opening **35** at an end portion of the cylinder **20** protruding from the casing **1** is coupled to a tube **37** for the inlet of air coming from a known pneumatic circuit, which includes a source of compressed air (not shown in figure 1). An air drainage system includes an interspace or chamber **40,** defined in the wall of the cylinder **20.** Chamber **40** communicates on one side with the internal surface of the cylinder **20** by means of an internal opening facing the wall of the piston **22** between the two gaskets **25** and **27,** on the other side with a drainage duct **44** coupled to an associated discharge pipe, not shown in figure 1. The drainage system is necessary to exhaust the air that inevitably leaks in the spaces between cylinder **20** and piston **22** in the course of mutual displacements. It is to be noted that air mostly leaks from the hollow of cylinder **20** on the side of the gasket **25,** since the latter can not be too compressed in order to enable correct sliding displacements.

A locating stem **46** has one end coupled in an adjustable way to the arm **4,** whereas the other end is free and defines a substantially plane abutment surface **48** facing the piston **22,** more specifically the thrust surface of the ball **30.**

A differential inductive transducer **50** of a known type includes windings fixed to the casing **1** and a core made of ferromagnetic material, coupled to the arm **4** by means of a stem.

Under normal working conditions, before moving the head and a workpiece to be checked towards each other to a checking mutual arrangement in a known way, in order to prevent the feeler **7** from impacting against the workpiece or other obstacles during such movement, the arm **4** is brought to a definite inoperative position in which the feeler **7** is far from the checking position. To this purpose, the retraction device **18** is activated by making compressed air flow inside through the tube **37**. The pressure that the air applies against the piston **22** urges the latter to displace upwards (with reference to the arrangement of figure 1) in opposition to the thrust of spring **33.** When the thrust surface of the ball **30** contacts the abutment surface **48** of the locating stem **46,** the arm **4** is urged to move in a counterclockwise sense (with reference to figure 1) until the internal portion of the arm **4** is in abutment against the head of the screw **12,** so defining the inoperative position of the arm **4.**

When the checking mutual arrangement is reached and a workpiece is present in the checking position, the retraction device **18** is excluded, by cutting off the air flow and discharging the pressure by means of known appropriate devices, and the spring **33** draws the piston **22** back down. Then, the tractive force that spring **14** applies to arm **4** urges the feeler **7** in contact with the workpiece to be checked. The position that the feeler **7** and consequently the arm **4** undertake further to such contact is detected, in a known way, by the transducer **50** which transmits associated signals to a display and processing unit, not shown in figure 1.

Figure 2 illustrates, in different scale, a retraction device **68** that substitutes the device **18,** shown in figure 1, in a head according to the present invention.

Likewise the device **18,** the retraction device **68** is pneumatically-operated and includes a cylinder **70** coupled to the casing **1** at an appropriate seat. A piston **72** can slide inside the cylinder **70** and sealing elements between the piston **72** and the cylinder **70** are provided. In particular a sliding gasket or "lip seal" gasket **75** is housed in a circular seat **74** of the piston **72.** The piston **72** has a central hollow area **78,** and a ball **80,** axially arranged, that defines a thrust surface. A return compression spring **83** has its ends coupled to the piston **72** and to the cylinder **70,** respectively. An axial opening **85** at an ending area of the cylinder **70** protruding from the casing **1** is coupled to a tube **87** for the inlet of air coming from a known pneumatic circuit that includes a source of compressed air (not shown in figure 2). The sealing elements further include a bellows gasket **88,** which is fixed (for example glued) to surfaces of the cylinder **70** and of the piston **72** facing each other, and housed in the cylinder **70,** partially embraced in the central hollow area **78** of the piston **72.** In this way, the ends of the sealing gasket **88** are stationary with respect to the casing **1** (to which the cylinder is coupled) and to the piston **72.**

The head according to the present invention operates as described with reference to figure 1, also insofar as the retraction phase of the arm **4** achieved by means of the device **68** is concerned.

The presence and the arrangement of the bellows gasket **88** provide various advantages with respect to the known solution of figure 1. First of all, it enables to eliminate one of the two sliding sealing gaskets (the "O-rink" **27** shown in figure 1), so considerably limiting the negative effects of friction and the consequently difficult compromise between a high degree of sealing and a low interference with the correct displacement between piston and cylinder. Moreover, the bellows gasket **88** separates the area of cylinder **70** which contacts the internal hollow of the casing **1** from the sliding area between piston **72** and cylinder **70,** substantially preventing damping fluids, located in the head, from leaking outside.

In addition, as the only gasket, the "lip seal" gasket **75,** is substantially unidirectional (i.e. it provides a prevailing sealing action along one of the two displacement directions of the piston, or, in other words, ensures the sealing only along' one displacement direction), the drainage circuit, that is necessary in the embodiment of figure 1, can be omitted. In fact, the air that could leak through the gasket **75** when the piston **72** displaces for providing the retraction of the arm **4** (upwards with reference to the figures)is held by the bellows gasket **88** and can flow back to the opening **85,** and consequently to the tube **87** through the same gasket **75,** when the air supply is cut off and the circuit is in course to discharge in a known way.

Thus, the solution according to the present invention has a further remarkable advantage: one of the couplings communicating with the exterior of the casing may be dispensed with, enabling costs reduction and more simplicity both of the head and associated applications. The embodiment according to figure 2 has a further advantage with respect to the arrangement illustrated in figure 9 of the mentioned patent US-B1-6269546, wherein the retraction device is simply achieved by means of a bellows, which is closed at one end and is activated by compressed air. In fact, in the case of the present invention, even though problems owing to frictions between displacing parts are considerably limited, the bellows gasket embraced in the cylinder **70** is definitely more protected and less stressed, ensuring, as a consequence, more reliability and extended life.

Preferably, the bellows gasket **88** can be made of rubber, or plastic materials, such as polyurethane, or metal.

Thrust surface (ball **80)** and abutment surface **48** are arranged in such a way that they mutually contact substantially at, or near, the longitudinal plane that includes the rotation axis defined by the fulcrum **10**. In this way transversal slidings between stem **48** and ball **80** are substantially avoided.

A head according to the present invention can differ with respect to what is described and illustrated herein so far. For example, the thrust surface of the piston **72** can include a convex portion different from the portion of the ball **80,** or can be substantially plane. The abutment surface **48** can further include a spherical portion or, generally, a convex one.

In a head according to the present invention, the head features, that have been briefly illustrated with reference to figure 1, can be realized in different ways. Such features include, for example, nature, shape and coupling of the casing **1,** of the arm **4,** of the fulcrum **10,** of the biasing device (spring **14),** of the mechanical limiting devices (screw **12),** of the transducer **50** and other components.

## Claims

1. Head for checking linear dimensions of mechanical pieces, including
• a support element (**1**) that defines a longitudinal geometrical axis,
• a movable armset with an arm (**4**), movable with respect to the support element (**1**) and carrying a feeler (**7**),
• a fulcrum. (**10**), coupled to the arm (**4**) and to the support element (**1**) for enabling limited rotational displacements of said arm (**4**) with respect to said support element (**1**),
• a retraction device (**68**), including a piston (**72**), movable with respect to the support element (**1**), and sealing elements (**75**, **88**), the piston (**72**) being adapted for cooperating with the movable arm (**4**) to bring the movable arm (**4**) to a definite inoperative position, and
• a transducer (**50**) for providing signals depending on the position of said arm (**4**) with respect to said support element (**1**),
**characterized in that** said sealing elements of the retraction device (**68**) include a bellows gasket (**88**), that has its ends stationary with respect to the support element (**1**) and the piston (**72**).

2. The head according to claim 1, wherein said retraction device (**68**) includes a cylinder (**70**) coupled to the support element (**1**), said piston (**72**) being housed in the cylinder (**70**) and sliding therein, one of said ends of the bellows gasket (**88**) being fixed to the cylinder (**70**).

3. The head according to claim 2, wherein the bellows gasket (**88**) is housed inside the cylinder (**70**).

4. The head according to any one of claim 2 or claim 3, wherein said retraction device (**68**) includes a pneumatic circuit with a source of compressed air, the cylinder (**70**) being coupled to said pneumatic circuit.

5. The head according to any one of claims 2 to 4, wherein said retraction device (**68**) includes a return spring (**83**) arranged between said cylinder (**70**) and said piston (**72**).

6. The head according to any one of the preceding claims, wherein said piston (**72**) includes a thrust surface (**80**) adapted to cooperate with an abutment surface (**48**), the latter being integral with the arm (**4**).

7. The head according to claim 6, wherein at least one of said thrust surface (**80**) and abutment surface (**48**) includes a convex portion.

8. The head according to claim 7, wherein said thrust surface (**80**) includes a substantially spherical portion.

9. The head according to any one of claims 6 to 8, wherein the retraction device (**68**) includes a locating stem (**46**) coupled to the arm (**4**), the locating stem including a free end that defines said abutment surface (**48**).

10. The head according to claim 9, wherein said locating stem (**46**) is coupled to the arm (**4**) in an adjustable way.

11. The head according to any one of the preceding claims, including mechanical limiting devices (**12**) for limiting the rotational displacements of said movable arm (**4**) and for defining said definite inoperative position of the movable arm (**4**).

12. The head according to any one of the preceding claims, wherein the bellows gasket (**88**) is made of plastic.

13. The head according to any one of claims 1 to 11, wherein the bellows gasket (**88**) is made of metal.

14. The head according to any one of claims 1 to 11, wherein the bellows gasket (**88**) is made of rubber.

15. The head according to any one of the preceding claims, wherein the piston (**72**) is movable along two displacing directions, the sealing elements of the retraction device (**68**) further including a sliding gasket (**75**), coupled to the piston (**72**) and adapted for performing a prevailing sealing action along one of said two displacing directions of the piston (**72**).

## Patentansprüche

1. Kopf zur Prüfung der linearen Abmessungen von mechanischen Teilen mit
- einem Lagerelement (1) das eine geometrische Längsachse besitzt,
- einem beweglichen Armsatz mit einem Arm (4), der relativ zum Lagerelement bewegbar (1) ist und einen Fühler (7) trägt,
- einem Drehlager (10), das mit dem Arm (4) und dem Lagerelement (1) verbunden ist um begrenzte Drehverschiebungen des Armes (4) relativ zum Lagerelement (1) zu ermöglichen,
- eine Rückzugsvorrichtung (68), die einen relativ zum Lagerelement (1) beweglichen Kolben (71) und Dichtelementen (75, 88) umfasst, wobei der Kolben mit dem beweglichen Arm zusammenwirken kann um den beweglichen Arm (4) in eine definierte Außerbetriebsstellung zu bringen, und
- einem Signalumformer (50) zum Ausliefern von Signalen, die von der Stellung des Armes (4) relativ zum Lagerelement (1) abhängen,
**dadurch gekennzeichnet, dass**
die Dichtelementen der Rückzugsvorrichtung (68) eine Balgdichtung (88) umfassen, deren Enden bezüglich des Lagerelements (1) und des Kolbens (72) ortsfest sind.

2. Kopf nach Anspruch 1, bei dem die Rückzugsvorrichtung (68) einen mit dem Lagerelement (1) verbundenen Zylinder (70) umfasst, wobei der Kolben (72) im Zylinder (70) angeordnet ist und darin verschiebbar ist, und eines der Enden der Balgdichtung (88) am Zylinder (70) befestigt ist.

3. Kopf nach Anspruch 2, bei dem die Balgdichtung (88) innerhalb des Zylinders (70) angeordnet ist.

4. Kopf nach Anspruch 2 oder Anspruch 3, bei dem die Rückzugsvorrichtung (68) einen Pneumatikkreis mit einer Druckluftquelle umfasst, wobei der Zylinder (70) mit dem Pneumatikkreis verbunden ist.

5. Kopf nach einem der Ansprüche von 2 bis 4, bei dem die Rückzugsvorrichtung (68) eine Rückzugsfeder (83) umfasst, die zwischen dem Zylinder (70) und dem Kolben (72) angeordnet ist.

6. Kopf nach einem der vorangehenden Ansprüche, bei dem der Kolben (72) eine Anlauffläche (80) umfasst, die mit einer Anschlagfläche (48) zusammenwirken kann, wobei die Letztere einteilig mit dem Arm (4) ist.

7. Kopf nach Anspruch 6, bei dem mindestens eine der Anlauffläche (80) oder der Anschlagfläche (48) einen gewölbten Teilbereich aufweist.

8. Kopf nach Anspruch 7, bei dem die Anlauffläche (80) einen wesentlich kugelförmigen Teilbereich umfasst.

9. Kopf nach einem der Ansprüche von 6 bis 8, bei dem die Rückzugsvorrichtung (68) eine mit dem Arm (4) verbundene Anschlagstange (46) umfasst, wobei die Anschlagstange ein freies Ende umfasst, das die Anschlagfläche (48) besitzt.

10. Kopf nach Anspruch 9, bei dem die Anschlagstange (46) mit dem Arm (4) einstellbar verbunden ist.

11. Kopf nach einem der vorangehenden Ansprüche, der mechanische Begrenzungsvorrichtungen (12) zum Begrenzen der Drehverschiebungen des beweglichen Armes (4) und zum Besitzen der definierten Außerbetriebsstellung des beweglichen Armes (4) umfasst.

12. Kopf nach einem der vorangehenden Ansprüche, bei dem die Balgdichtung (88) aus Kunststoff besteht.

13. Kopf nach einem der Ansprüche von 1 bis 11, bei dem die Balgdichtung (88) aus Metall besteht.

14. Kopf nach einem der Ansprüche von 1 bis 11, bei dem die Balgdichtung (88) aus Gummi besteht.

15. Kopf nach einem der vorangehenden Ansprüche, bei dem der Kolben (72) entlang zwei Verschieberichtungen bewegbar ist, wobei die Dichtelementen der Rückzugsvorrichtung (68) ferner eine verschiebbare Dichtung (75) umfasst, die mit dem Kolben (72) verbunden ist und eine Dichtwirkung vorwiegend entlang einer der zwei Verschieberichtungen des Kolbens (72) auftreten kann.

## Revendications

1. Tête de vérification des dimensions linéaires de pièces mécaniques comportant
- un élément de support (1) définissant un axe géométrique longitudinal,
- un ensemble de bras mobile ayant un bras (4), qui est mobile par rapport à l'élément de support (1) et porte un palpeur (7),
- un pivot (10) relié au bras (4) et à l'élément de support (1) pour permettre des déplacements en rotation limités dudit bras (4) par rapport audit élément de support (1),
- un dispositif de retrait (68), incluant un piston (72), mobile par rapport à l'élément de support (1), et des éléments d'étanchéité (75, 88), le piston (72) étant adapté pour coopérer avec le bras mobile (4) pour amener le bras mobile (4) dans une position inactive définie, et
- un transducteur (50) pour fournir des signaux fonction de la position dudit bras (4) par rapport audit élément de support (1),
**caractérisé en ce que** lesdits éléments d'étanchéité du dispositif de retrait (68) incluent un joint à soufflet (88), dont les extrémités sont fixes par rapport à l'élément de support (1) et au piston (72).

2. Tête selon la revendication 1, dans laquelle ledit dispositif de retrait (68) inclut un cylindre (70) relié à l'élément de support (1), ledit piston (72) étant logé dans le cylindre (70) et étant coulissant dans celui-ci, une desdites extrémités du joint à soufflet (88) étant fixée au cylindre (70).

3. Tête selon la revendication 2, dans laquelle le joint à soufflet (88) est logé à l'intérieur du cylindre (70).

4. Tête selon la revendication 2 ou la revendication 3, dans laquelle ledit dispositif de retrait (68) inclut un circuit pneumatique avec une source d'air comprimé, le cylindre (70) étant relié audit circuit pneumatique.

5. Tête selon l'une quelconque des revendications de 2 à 4, dans laquelle ledit dispositif de retrait (68) inclut un ressort de rappel (83) agencé entre ledit cylindre (70) et ledit piston (72).

6. Tête selon l'une quelconque des revendications précédentes, dans laquelle ledit piston (72) inclut une surface de poussée (80) adaptée pour coopérer avec une surface de butée (48), cette dernière étant solidaire du bras (4).

7. Tête selon la revendication 6, dans laquelle au moins une desdites surface de poussée (80) et surface de butée (48) inclut une partie convexe.

8. Tête selon la revendication 7, dans laquelle ladite surface de poussée (80) inclut une partie essentiellement sphérique.

9. Tête selon l'une quelconque des revendications de 6 à 8, dans laquelle le dispositif de retrait (68) inclut une tige de butée (46) reliée au bras (4), la tige de butée incluant une extrémité libre définissant ladite surface de butée (48).

10. Tête selon la revendication 9, dans laquelle ladite tige de butée (46) est reliée au bras (4) de façon réglable.

11. Tête selon l'une quelconque des revendications précédentes, qui inclut des dispositifs formant butée mécanique de fin de course (12) pour limiter les déplacements en rotation dudit bras mobile (4) et pour définir ladite position inactive définie du bras mobile (4).

12. Tête selon l'une quelconque des revendications précédentes, dans laquelle le joint à soufflet (88) est constitué d'une matière plastique.

13. Tête selon l'une quelconque des revendications de 1 à 11, dans laquelle le joint à soufflet (88) est constitué d'un métal.

14. Tête selon l'une quelconque des revendications de 1 à 11, dans laquelle le joint à soufflet (88) est constitué de caoutchouc.

15. Tête selon l'une quelconque des revendications précédentes, dans laquelle le piston (72) est mobile le long de deux directions de déplacement, les éléments d'étanchéité du dispositif de retrait (68) incluant en outre un joint coulissant (75) qui est relié au piston (72) et est adapté pour réaliser une étanchéité principalement le long d'une desdites deux directions de déplacement du piston (72).
